# EUROPÄISCHE PATENTSCHRIFT

(11) **EP 2 193 279 B1**
(45) Veröffentlichungstag und Bekanntmachung des Hinweises auf die Patenterteilung: **18.04.2012**
(21) Anmeldenummer: 08804762.6
(22) Anmeldetag: 25.09.2008
(51) Int. Cl.: F16C 17/18, F16C 17/04, F16C 17/10, F01D 25/16, F16C 33/10

(54) **HYDRODYNAMISCHES AXIALLAGER**
HYDRODYNAMIC AXIAL BEARING
PALIER AXIAL HYDRODYNAMIQUE

(30) Priorität: 26.09.2007 EP 07117287
(43) Veröffentlichungstag der Anmeldung: 09.06.2010
(60) Teilanmeldung: 12157550.0
(73) Patentinhaber: ABB Turbo Systems AG, 5400 Baden (CH)
(72) Erfinder: DI PIETRO, Marco, CH-4665 Oftringen (CH); AMMANN, Bruno, CH-5000 Aarau (CH); LEBONG, Markus, CH-5443 Niederrohrdorf (CH)
(74) Vertreter: ABB Patent Attorneys
(86) Internationale Anmeldenummer: PCT/EP2008/062878
(87) Internationale Veröffentlichungsnummer: WO 2009/043809

(56) Entgegenhaltungen:
- JP-A- 2003 222 123
- JP-A- 2006 077 871
- US-A- 3 370 897
- US-A1- 2005 069 232
- US-A1- 2006 140 520

## Beschreibung

### Technisches Gebiet

Die Erfindung bezieht sich auf das Gebiet der hydrodynamischen Axiallagerung von rotierenden Wellen, wie sie etwa in Abgasturboladern eingesetzt werden.

Die Erfindung betrifft ein hydrodynamisches Axiallager mit einer Schwimmscheibe und eine solche Schwimmscheibe.

### Stand der Technik

Werden schnell drehende Rotoren mit axialen Schubkräften beaufschlagt, kommen tragfähige Axiallager zum Einsatz. Beispielsweise bei Abgasturboladern werden hydrodynamische Axiallager zur Aufnahme von strömungsbedingt hohen Axialkräften und zur Führung der Turbinenwelle in axialer Richtung eingesetzt. Um bei solchen Anwendungen das Schiefstellungskompensationsvermögen und das Verschleissverhalten zu verbessern, können bei hydrodynamischen Axiallagern zwischen einem mit Wellendrehzahl rotierenden Lagerkamm und einem nicht rotierenden Lagergehäuse frei schwimmende Scheiben, sogenannte Schwimmscheiben, eingesetzt werden.

Beispiele hierzu finden sich unter anderem in GB1095999, EP0840027, EP1199486 und EP1644647. Die radiale Führung der Schwimmscheibe erfolgt entweder auf dem rotierenden Körper, d.h. auf der Welle bzw. auf dem Lagerkamm durch ein in die Schwimmscheibe integriertes Radiallager, wie es beispielsweise in EP0840027 offenbart ist, oder aber auf einem feststehenden, den rotierenden Körper konzentrisch umgebenden Lagerbund, wie es beispielsweise in EP1199486 offenbart ist. Die Schmierung eines solchen hydrodynamischen Axiallagers erfolgt in der Regel mittels Schmieröl aus einem eigenen Schmierölsystem oder bei Abgasturboladern via das Schmierölsystem einer mit dem Abgasturbolader verbundenen Brennkraftmaschine.

Im Betrieb baut sich zwischen der mit nur etwa halber Wellendrehzahl umlaufenden Schwimmscheibe und der Welle bzw. dem auf der Welle angeordneten Lagerkamm ein tragfähiger Schmierfiilm auf. Hierfür sind in der Regel auf beiden Seiten der Schwimmscheibe profilierte Kreisringflächen vorgesehen, welche jeweils zusammen mit einer ebenen Gleitfläche den Schmierspalt bilden. Die profilierten Kreisringflächen umfassen zumindest in Umfangsrichtung orientierte Keilflächen, welche zusammen mit den ebenen Gleitflächen einen konvergierenden Spalt bilden. Wird genügend Schmiermittel in diesen konvergierenden Spalt hineingezogen, bildet sich der tragfähige Schmierfilm. In radialer Richtung verbreitet sich das Schmiermittel aufgrund der Fliehkraftwirkung der schnell rotierenden Schwimmscheibe.

Die Reibmomente an den axialen und radialen Gleitflächen der Schwimmscheibe haben einen Einfluss auf die Drehzahl der Schwimmscheibe. Bei hohen Wellendrehzahlen liegt sie typischerweise unter 50% der Wellendrehzahl, die Schwimmscheibe dreht also weniger als halb so schnell wie die Welle. Dadurch ergeben sich in den beiden axialen Schmierspalten unterschiedliche Relativgeschwindigkeiten. Die Relativgeschwindigkeit der Welle bezüglich der Schwimmscheibe ist dabei grösser als die Relativgeschwindigkeit der Schwimmscheibe bezüglich des Lagergehäuses.

Die sich einstellenden Spalthöhen in den beiden axialen Schmierspalten sind aufgrund unterschiedlicher Relativgeschwindigkeiten und unterschiedlicher Fliehkraftwirkungen ungleich gross. Da die Lagergrösse auf den kleinsten je auftretenden Schmierspalt ausgelegt wird, ist ein Lagerspalt überdimensioniert, was zu unnötig grosser Verlustleistung und unnötig grossem Öldurchsatz führen kann.

### Kurze Darstellung der Erfindung

Aufgabe der vorliegenden Erfindung ist es daher, ein hydrodynamisches Axiallager mit Schwimmscheibe bezüglich Verlustleistung und Öldurchsatz zu optimieren.

Erfindungsgemäss wird dies durch unterschiedlich grosse Tragfähigkeiten der beiden Lagerspalte auf den beiden Seiten der Schwimmscheibe erreicht, so dass die minimalen Schmierspalte im Auslegungspunkt gleich sind. Als Tragfähigkeit eines Lagers wird die Tragkraft in Abhängigkeit von der Drehzahl, dem minimalem Schmierspalt und den Öleigenschaften bezeichnet.

Die unterschiedliche Tragfähigkeit wird erfindungsgemäss durch geometrisch unterschiedlich ausgebildete Schmierspalte erzielt. Dabei gilt als Schmierspalt der von einer profilierten Kreisringfläche und einer ebenen Gleitfläche begrenzte Raum zwischen den das Axiallager bildenden Bauteilen, also zwischen dem Lagergehäuse und der Schwimmscheibe auf der einen und der Schwimmscheibe und dem mit der Welle mitrotierenden Lagerkamm auf der anderen Seite.

Durch eine radiale Abstufung der Schwimmscheibe lassen sich die Flächen der beiden axialen Schmierspalte individuell dimensionieren, so dass die minimale Spalthöhe in beiden Schmierspalten im Auslegungspunkt gleich gross ist. Dabei ist vorteilhafterweise die dem Lagergehäuse zugewandte Seite der Schwimmscheibe mit einer grösseren tragenden Fläche ausgestattet als die dem Lagerkamm zugewandte Seite.

Durch eine radiale Verkürzung einer der profilierten Kreisflächen kann deren Grösse auch verringert werden. Dabei kann die Verkürzung radial innen, radial aussen oder radial innen und aussen erfolgen.

Als tragende Fläche des Axiallagers bezeichnet werden die zusammen den Schmierspalt bildenden profilierten Kreisring- und die ebene Gleitfläche. Eine Reduktion der Grösse der tragenden Fläche erfolgt auch dann, wenn beispielsweise nur eine der beiden profilierten Kreisringflächen in radialer Richtung verkürzt ist, während die ebenen Gleitflächen die gleichen Abmessungen haben. Der gleiche Effekt wird erzielt, wenn zwei identisch grosse profilierte Kreisringflächen mit ebenen Gleitflächen zusammenwirken, von denen die eine etwa in radialer Richtung sich nicht über die volle Kreisringfläche erstreckt.

Eine Variation der Tragfähigkeit kann auch durch eine geometrische Änderung der Profilierung in Umfangsrichtung erreicht werden. So kann beispielsweise die Segmentzahl von sechs auf fünf reduziert werden. Oder es kann die Erstreckung der Ölnuten in Umfangsrichtung vergrössert werden.

Mit den genannten Ausführungsformen können die minimalen Schmierspalthöhen auf beiden Seiten der Schwimmscheibe, trotz unterschiedlichen Relativgeschwindigkeiten zwischen der Schwimmscheibe und dem Lagergehäuse auf der einen und der Schwimmscheibe und dem Lagerkamm auf der anderen Seite, einander angeglichen werden.

Alternativ kann eine oder beide Seiten der Schwimmscheibe als ebene Gleitfläche ausgebildet sein und die profilierte Kreisringfläche auf der Welle bzw. dem Lagerkamm angeordnet sein. Ist beispielsweise die der Welle zugewandte Seite der Schwimmscheibe als ebene Gleitfläche ausgebildet und die Kreisringfläche der Welle entsprechend profiliert, sind bei beiden Lagerteilen jeweils die schneller drehenden Kreisringflächen profiliert.

### Kurze Beschreibung der Zeichnungen

Nachfolgend werden Ausführungsformen der Erfindung anhand von Zeichnungen detailliert erläutert. Hierbei zeigt
- Fig. 1: eine erste Ausführungsform eines erfindungsgemäss ausgestalteten Axialgleitlagers mit einer gestuften Schwimmscheibe,
- Fig.2: eine zweite Ausführungsform eines erfindungsgemäss ausgestalteten Axialgleitlagers mit einer Schwimmscheibe mit unterschiedlich profilierten Kreisringflächen, und
- Fig. 3: einen Schnitt durch die Schmierölversorgung einer dritten Ausführungsform eines erfindungsgemäss ausgestalteten Axialgleitlagers mit einer gestuften Schwimmscheibe.

### Weg zur Ausführung der Erfindung

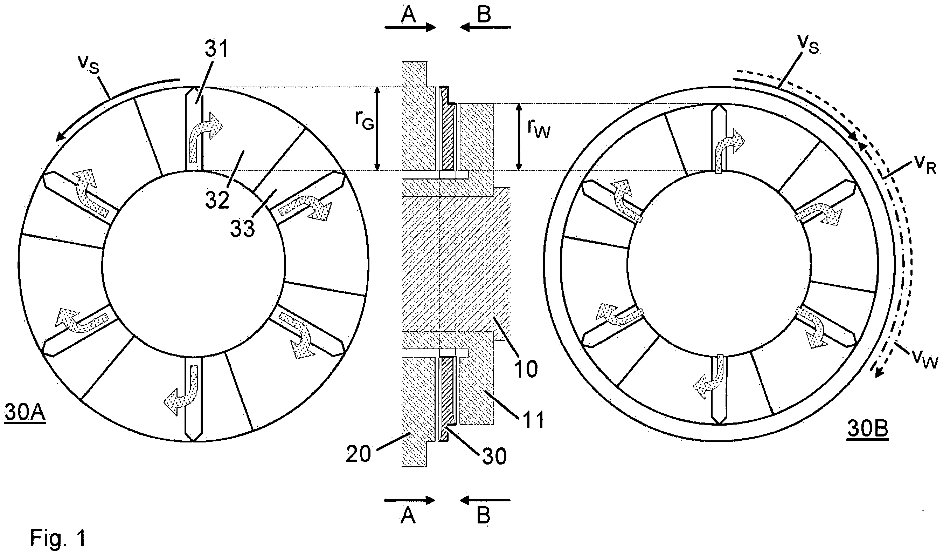

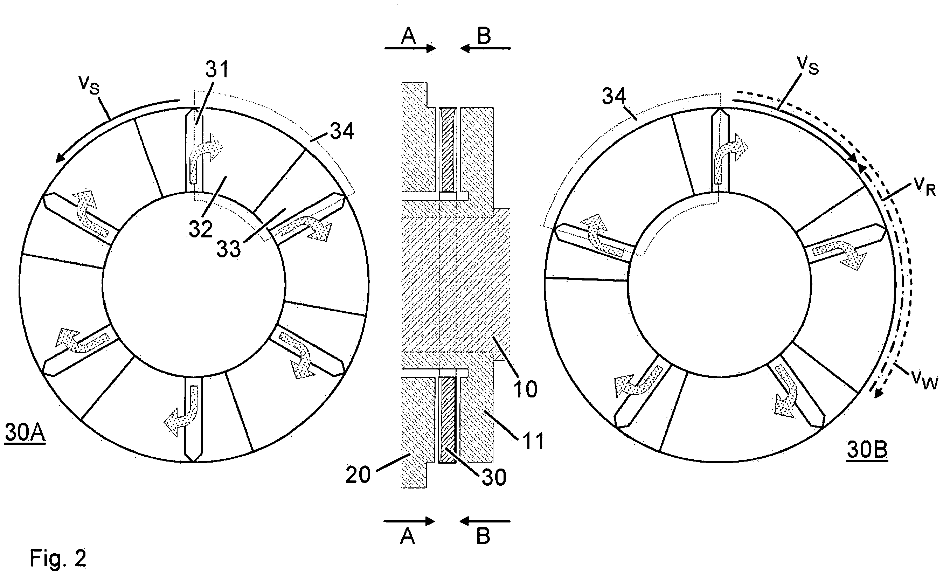

Fig. 1 und Fig. 2 zeigen zwei Ausführungsformen des erfindungsgemässen hydrodynamischen Axiallagers, wobei jeweils in der Mitte der Figuren ein entlang der Wellenachse geführter Schnitt durch das Axiallager dargestellt ist. Das Axiallager umfasst eine Schwimmscheibe 30, welche axial zwischen dem Lagergehäuse 20 und dem auf der Welle 10 angeordneten und mit der Welle rotierenden Lagerkamm 11 1 angeordnet ist. Der Lagerkamm kann optional als radial abstehender Fortsatz in die Welle integriert sein, so dass die Schwimmscheibe axial zwischen Lagergehäuse und Wellenfortsatz angeordnet ist. Jeweils im linken und rechten Bereich der Figuren ist eine Ansicht auf die Schwimmscheibe von der jeweiligen Seite her betrachtet dargestellt. Auf der linken Seite ist die in Richtung A betrachtete Schwimmscheibe 30A, auf der rechten Seite die in Richtung B betrachtete Schwimmscheibe 30B dargestellt.

Die dem Lagergehäuse zugewandte profilierte Kreisringfläche der Schwimmscheibe 30A rotiert mit der absoluten Geschwindigkeit v_{S}, in der dargestellten Ausführungsform in Richtung A betrachtet also im Gegenuhrzeigersinn. Dabei wird das über Schmiernuten 31 radial in den Bereich der profilierten Kreisringfläche der Schwimmscheibe zwischen der Schwimmscheibe 30 und dem Lagergehäuse 20 eingebrachte Schmieröl, wie mit den breiten Pfeilen angedeutet, entgegen der Drehrichtung der Schwimmscheibe in die Keilflächen 32 hineingezogen. Durch die Verengung des Schmierspalts zwischen den Keilflächen 32 und der gegenüberliegenden ebenen Gleitfläche am Lagergehäuse wird der für die Tragfähigkeit des Axiallagers benötigte Druck aufgebaut. Der grösste Druck ergibt sich im Bereich des Übergangs von der Keilfläche 32 zur Rastfläche 33.

Die dem Lagerkamm zugewandte profilierte Kreisringfläche der Schwimmscheibe 30B rotiert mit der absoluten Geschwindigkeit v_{S}, in der dargestellten Ausführungsform in Richtung B betrachtet also im Uhrzeigersinn. Da der Lagerkamm 11 allerdings mit mehr als doppelt so grosser Geschwindigkeit v_{W} in die gleiche Richtung rotiert, ergibt sich eine Relativgeschwindigkeit der profilierten Kreisringfläche v_{R}, welche in Richtung B betrachtet im Gegenuhrzeigersinn verläuft. Die Relativgeschwindigkeit v_{R} ist dabei grösser als die absolute Geschwindigkeit v_{S}. Wiederum ist mit den breiten Pfeilen angedeutet, wie das Schmieröl über die Schmiernuten radial nach aussen geführt und dabei in Umfangsrichtung in die Keilflächen hineingezogen wird.

Bei der Ausführungsform nach Fig. 1 weist die Schwimmscheibe 30 eine radiale Abstufung auf, so dass die dem Lagergehäuse 20 zugewandte Seite die dem Lagerkamm 11 zugewandte Seite in radialer Richtung überragt. Die radialen Ausdehnungen der beiden Seiten der Schwimmscheibe sind somit unterschiedlich. Die profilierte Kreisringfläche auf der dem Lagergehäuse zugewandten Seite weist eine Ringbreite r_{G} auf, welche grösser ist als die Ringbreite r_{W} der Kreisringfläche auf der dem Lagerkamm zugewandten Seite der Schwimmscheibe.

Aufgrund der höheren relativen Geschwindigkeit, mit welcher die Keilflächen der profilierten Kreisringfläche auf der dem Lagerkamm zugewandten Seite der Schwimmscheibe entlang der ebenen Gleitfläche auf dem Lagerkamm rotieren, stellt sich trotz der kleineren tragenden Fläche ein Schmierspalt ein, welcher demjenigen zwischen dem Lagergehäuse und der dem Lagergehäuse zugewandten Seite der Schwimmscheibe entspricht.

Bei der Ausführungsform nach Fig. 2 weist die Schwimmscheibe 30 zwei gleich grosse Seiten auf, deren profilierte Kreisringflächen jedoch unterschiedlich ausgebildet sind. Die profilierte Kreisringfläche ist in mehrere Segmente 34 unterteilt, wobei ein Segment eine Schmiernut 31, eine Keilfläche 32 und eine angrenzende Rastfläche 33 umfasst. Die gegenüber dem feststehenden Lagergehäuse langsamer rotierende Kreisringfläche auf der linken Seite weist eine höhere Anzahl von Segmenten 34 auf als die mit einer höheren Relativgeschwindigkeit rotierende Kreisringfläche auf der dem Lagerkamm zugewandten Seite.

Optional kann die Tragfähigkeit variiert werden, wenn etwa der Steigungswinkel der Keilfläche geändert und dadurch der Bereich mit der grössten Tragkraft verkleinert oder ausgedehnt wird. Der Übergang zwischen der Keilfläche 32 und der Rastfläche 33 kann mittels einer Kante oder als eine kontinuierlich verlaufende, kantenlose Fläche realisiert sein. In letzterem Fall braucht nicht zwischen Keil- und Rastfläche unterschieden werden, so kann etwa die Keilfläche auch bis hin zur nächsten Schmiemut kontinuierlich mit einem stetig kleiner werdenden Winkel ansteigen.

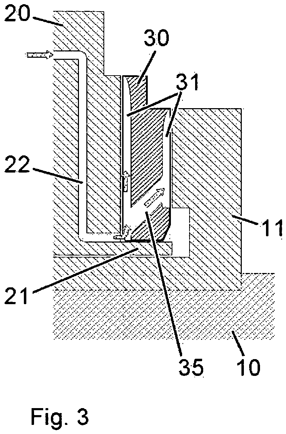

Bei der Ausführungsform nach Fig. 3 weist die Schwimmscheibe 30 wiederum eine radiale Abstufung auf, so dass die dem Lagergehäuse 20 zugewandte Seite die dem Lagerkamm 11 zugewandte Seite in radialer Richtung überragt. Zusätzlich ist auf der radial inneren Seite der dem Lagerkamm zugewandten Seite eine Abschrägung angebracht und der Innenradius der profilierten Kreisringfläche etwas nach aussen vergrössert. Der innere Rand der ebenen Gleitfläche am Lagerkamm ist radial nach aussen versetzt, wodurch sich gegenüber der ersten Ausführungsform die tragende Fläche des Schmierspalts zwischen der Schwimmscheibe 30 und dem Lagerkamm 11 1 zusätzlich reduziert.

Bei einer Schwimmscheibe eines hydrodynamischen Axiallagers müssen beide Seiten mit Schmieröl versorgt werden. Hierfür wird erfindungsgemäss mindestens eine Versorgungsbohrung 35 in die Schwimmscheibe eingelassen. Die Versorgungsbohrung 35 verbindet die beiden Seiten der Schwimmscheibe und erlaubt die Zufuhr von Schmieröl von einer Seite auf die andere. Optional weist die Schwimmscheibe für jede Schmiernut auf der dem Lagerkamm zugewandten Seite eine Versorgungsbohrung auf. In der dargestellten Ausführungsform wird das Schmieröl über eine Schmierölzuleitung 22 im Lagergehäuse in den Bereich des Schmierspalts zwischen der Schwimmscheibe 30 und dem Lagergehäuse 20 geführt. Durch die Rotation der profilierten Kreisringfläche wird das Schmieröl entlang der Schmiernuten 31 radial nach aussen gefördert und dabei in Umfangsrichtung in die Keilflächen hineingezogen. Über die im Bereich der Schmiernuten 31 angeordneten Versorgungsbohrungen 35, wird das Schmieröl auch in den Bereich des Schmierspalts zwischen der Schwimmscheibe 30 und dem Lagerkamm 11 gefördert. Sind die Versorgungsbohrungen dabei ausgehend von dem Schmierspalt mit der Schmierölzuführung von der Achsrichtung abweichend in einem Winkel zum äusseren Rand hin gerichtet, wird der Schmierölfluss durch die Rotation der Schwimmscheibe unterstützt.

Dank der Versorgungsbohrung kann auf Versorgungsnuten im Bereich des Radiallagers der Schwimmscheibe weitgehend verzichtet werden. Damit reduziert sich der Schmieröldurchsatz durch den Entkopplungsspalt zwischen dem Lagerkamm 11 und dem Lagerbund 21, welcher vorhanden ist, wenn die Schwimmscheibe 30 auf dem feststehenden Lagergehäuse gelagert ist. Dies ist insbesondere dann von Vorteil, wenn der Entkopplungsspalt im Bereich des Radiallagers der Schwimmscheibe ohne zusätzliches Dichtelement in den Spritzölraum, beispielsweise des Abgasturboladers, führt.

### Bezugszeichenliste

- 10: Welle
- 11: Lagerkamm
- 20: Lagergehäuse
- 21: Lagerbund
- 22: Schmierölzuleitung
- 30: Schwimmscheibe
- 30A: Schwimmscheibe Seite Lagergehäuse (in Richtung A betrachtet)
- 30B: Schwimmscheibe Seite Lagerkamm (in Richtung B betrachtet)
- 31: Schmiernut
- 32: Keilfläche
- 33: Rastfläche
- 34: Segment der profilierten Kreisringfläche
- 35: Versorgungsbohrung
- r_{G}: Ringbreite auf Seite des Lagergehäuses
- r_{W}: Ringbreite auf Seite des Lagerkamms
- v_{R}: Relativgeschwindigkeit der Schwimmscheibe bezüglich des Lagerkamms
- v_{S}: Geschwindigkeit der Schwimmscheibe
- v_{W}: Geschwindigkeit des Lagerkamms

## Patentansprüche

1. Hydrodynamisches Axiallager einer drehbar in einem Lagergehäuse (20) gelagerten Welle (10), umfassend eine Schwimmscheibe, welche axial zwischen dem Lagergehäuse und einem auf der Welle angeordneten Lagerkamm (11) angeordnet ist, wobei zwischen dem Lagergehäuse (20) und der Schwimmscheibe (30) und der Schwimmscheibe (30) und dem Lagerkamm (11) jeweils ein durch eine profilierte Kreisringfläche und eine ebene Gleitfläche begrenzter Schmierspalt ausgebildet ist, wobei die profilierten Kreisringflächen mehrere, den Schmierspalt jeweils in Umfangsrichtung verengende Keilflächen (32) umfassen, **dadurch gekennzeichnet, dass** eine Seite der Schwimmscheibe gegenüber der anderen Seite radial abgestuft ausgebildet ist, so dass die durch die profilierten Kreisringflächen und die ebenen Gleitflächen auf den beiden Seiten der Schwimmscheibe gebildeten Schmierspalte voneinander verschiedene geometrische Abmessungen aufweisen, welche zu unterschiedlich grossen tragenden Flächen auf den beiden Seiten der Schwimmscheibe führen, wobei die tragende Fläche des Schmierspalts zwischen der Schwimmscheibe (30) und dem Lagerkamm (11) kleiner ist als die tragende Fläche des Schmierspalts zwischen dem Lagergehäuse (20) und der Schwimmscheibe (30).

2. Hydrodynamisches Axiallager nach Anspruch 1, wobei die Schmierspalte beidseits der Schwimmscheibe unterschiedliche radiale Abmessungen aufweisen.

3. Hydrodynamisches Axiallager nach Anspruch 1 oder 2, wobei die beiden den Schmierspalt beidseits der Schwimmscheibe (30) bildenden, profilierten Kreisringflächen jeweils in eine unterschiedliche Anzahl Segmente (34) unterteilt sind, wobei ein Segment (34) jeweils eine Keilfläche (32) umfasst.

4. Hydrodynamisches Axiallager nach Anspruch 1 oder 2, wobei die beiden den Schmierspalt beidseits der Schwimmscheibe bildenden, profilierten Kreisringflächen unterschiedlich ausgebildete Keilflächen (32) aufweisen.

5. Hydrodynamisches Axiallager nach Anspruch 1 oder 2, wobei die profilierten Kreisringflächen Keilflächen (32) und ebene Rastflächen (33) umfassen, und die beiden den Schmierspalt beidseits der Schwimmscheibe bildenden, profilierten Kreisringflächen, ein unterschiedliches Flächenverhältnis von Rastfläche (33) zu Keilfläche (32) aufweisen.

6. Hydrodynamisches Axiallager nach einem der Ansprüche 1 bis 5, wobei in die Schwimmscheibe (30) mindestens eine Versorgungsbohrung (35) eingelassen ist, wobei die mindestens eine Versorgungsbohrung (35) die beiden Seiten der Schwimmscheibe miteinander verbindet.

7. Hydrodynamisches Axiallager nach Anspruch 6, wobei die Schwimmscheibe radiale Schmiernuten (31) aufweist, und die mindestens eine Versorgungsbohrung (35) zumindest auf einer Seite der Schwimmscheibe in eine Schmiernut (31) mündet.

8. Hydrodynamisches Axiallager nach Anspruch 6 oder 7, wobei die mindestens eine Versorgungsbohrung (35) in einem Winkel radial nach aussen gerichtet sind.

9. Abgasturbolader, umfassend eine Welle mit einem hydrodynamischen Axiallager nach einem der vorangehenden Ansprüchen.

10. Schwimmscheibe zur Verwendung in einem hydrodynamischen Axiallager zwischen einem Lagergehäuse und einer drehbar in dem Lagergehäuse gelagerten Welle nach einem der Ansprüche 1 bis 8, welche Schwimmscheibe beidseitig jeweils eine profilierte Kreisringfläche mit mehreren Keilflächen (32) aufweist, wobei die Keilflächen derart ausgebildet sind, dass sie einen Schmierspalt zwischen der Schwimmscheibe und einer ebenen Gleitfläche jeweils in Umfangsrichtung verengen, **dadurch gekennzeichnet, dass** eine Seite der Schwimmscheibe gegenüber der anderen Seite radial abgestuft ausgebildet ist, so dass die durch die profilierten Kreisringflächen und die ebenen Gleitflächen auf den beiden Seiten der Schwimmscheibe gebildeten Schmierspalte voneinander verschiedene geometrische Abmessungen aufweisen, welche zu unterschiedlich grossen tragenden Flächen auf den beiden Seiten der Schwimmscheibe führen.

11. Schwimmscheibe nach Anspruch 10, wobei die beiden profilierten Kreisringflächen jeweils in eine unterschiedliche Anzahl Segmente (34) unterteilt sind, wobei ein Segment (34) jeweils eine Keilfläche (32) umfasst.

## Claims

1. Hydrodynamic axial bearing for a shaft (10) which is mounted such that it can rotate in a bearing housing (20), comprising a floating disk which is arranged axially between the bearing housing and a bearing comb (11) which is arranged on the shaft, wherein a lubricating gap, which is bounded by a profiled annular surface and a smooth sliding surface is in each case formed between the bearing housing (20) and the floating disk (30), and the floating disk (30) and the bearing comb (11), wherein the profiled annular surfaces comprise a plurality of wedge surfaces (32) which each narrow the lubricating gap in the circumferential direction, **characterized in that** one side of the floating disk is radially stepped with respect to the other side, so that the lubricating gaps which are formed by the profiled annular surfaces and the smooth sliding surfaces on the two sides of the floating disk have different geometric dimensions to one another which lead to load-bearing areas of different size on the two sides of the floating disk, with the load-bearing area of the lubricating gap between the floating disk (30) and the bearing comb (11) being smaller than the load-bearing area of the lubricating gap between the bearing housing (20) and the floating disk (30).

2. Hydrodynamic axial bearing according to Claim 1, wherein the lubricating gaps on the two sides of the floating disk have different radial dimensions.

3. Hydrodynamic axial bearing according to Claim 1 or 2, wherein the two profiled annular surfaces which form the lubricating gap on both sides of the floating disk (30) are each subdivided into a different number of segments (34), wherein one segment (34) in each case comprises one wedge surface (32).

4. Hydrodynamic axial bearing according to Claim 1 or 2, wherein the two profiled annular surfaces which form the lubricating gap on both sides of the floating disk have wedge surfaces (32) of different design.

5. Hydrodynamic axial bearing according to Claim 1 or 2, wherein the profiled annular surfaces comprise wedge surfaces (32) and smooth latching surfaces (33), and the two profiled annular surfaces which form the lubricating gap on both sides of the floating disk have a different area ratio from the latching surface (33) to the wedge surface (32).

6. Hydrodynamic axial bearing according to one of Claims 1 to 5, wherein at least one supply hole (35) is incorporated in the floating disk (30), wherein the at least one supply hole (35) connects the two sides of the floating disk to one another.

7. Hydrodynamic axial bearing according to Claim 6, wherein the floating disk has radial lubricating grooves (31), and the at least one supply hole (35) opens into a lubricating groove (31) at least on one side of the floating disk.

8. Hydrodynamic axial bearing according to Claim 6 or 7, wherein the at least one supply hole (35) is directed at an angle radially outward.

9. Exhaust-gas turbocharger, comprising a shaft with a hydrodynamic axial bearing according to one of the preceding claims.

10. Floating disk for use in a hydrodynamic axial bearing between a bearing housing and a shaft which is mounted such that it can rotate in the bearing housing according to one of Claims 1 to 8, which floating disk has a profiled annular surface with a plurality of wedge surfaces (32) on each of its two sides, wherein the wedge surfaces are designed such that they each narrow a lubricating gap between the floating disk and a smooth sliding surface in the circumferential direction, **characterized in that** one side of the floating disk is radially stepped with respect to the other side, so that the lubricating gaps which are formed by the profiled annular surfaces and the smooth sliding surfaces on the two sides of the floating disk have different geometric dimensions to one another leading to load-bearing areas of different size on the two sides of the floating disk.

11. Floating disk according to Claim 10, wherein the two profiled annular surfaces are each subdivided into a different number of segments (34), wherein one segment (34) in each case comprises one wedge surface (32).

## Revendications

1. Palier axial hydrodynamique d'un arbre (10) monté à rotation dans un boîtier de palier (20), comprenant un disque flottant, qui est disposé axialement entre le boîtier de palier et une coiffe de palier (11) disposée sur l'arbre, une fente de lubrification limitée à chaque fois par une surface de bague circulaire profilée et une surface de glissement plane étant réalisée entre le boîtier de palier (20) et le disque flottant (30) et entre le disque flottant (30) et la coiffe de palier (11), les surfaces de bague circulaire profilées comprenant plusieurs surfaces de clavette (32) rétrécissant la fente de lubrification à chaque fois dans la direction périphérique, **caractérisé en ce qu'**un côté du disque flottant est réalisé de manière étagée radialement par rapport à l'autre côté, de sorte que les fentes de lubrification formées par les surfaces de bague circulaire profilées et les surfaces de glissement planes des deux côtés du disque flottant présentent des dimensions géométriques différentes les unes des autres, lesquelles donnent lieu à des surfaces portantes de tailles différentes des deux côtés du disque flottant, la surface portante de la fente de lubrification entre le disque flottant (30) et la coiffe de palier (11) étant inférieure à la surface portante de la fente de lubrification entre le boîtier de palier (20) et le disque flottant (30).

2. Palier axial hydrodynamique selon la revendication 1, dans lequel les fentes de lubrification de chaque côté du disque flottant présentent des dimensions radiales différentes.

3. Palier axial hydrodynamique selon la revendication 1 ou 2, dans lequel les deux surfaces de bague circulaire profilées formant la fente de lubrification de chaque côté du disque flottant (30) sont divisées à chaque fois en un nombre différent de segments (34), un segment (34) comprenant à chaque fois une surface de clavette (32).

4. Palier axial hydrodynamique selon la revendication 1 ou 2, dans lequel les deux surfaces de bague circulaire profilées formant la fente de lubrification de chaque côté du disque flottant présentent des surfaces de clavette (32) réalisées différemment.

5. Palier axial hydrodynamique selon la revendication 1 ou 2, dans lequel les surfaces de bague circulaire profilées comprennent des surfaces de clavette (32) et des surfaces d'encliquetage planes (33), et les deux surfaces de bague circulaire profilées formant la fente de lubrification de chaque côté du disque flottant présentent un rapport de surface différent de la surface d' encliquetage (33) à la surface de clavette (32).

6. Palier axial hydrodynamique selon l'une quelconque des revendications 1 à 5, dans lequel au moins un alésage d'alimentation (35) est pratiqué dans le disque flottant (30), l'au moins un alésage d'alimentation (35) reliant entre eux les deux côtés du disque flottant.

7. Palier axial hydrodynamique selon la revendication 6, dans lequel le disque flottant présente des rainures de lubrification radiales (31) et l'au moins un alésage d'alimentation (35) débouche au moins d'un côté du disque flottant dans une rainure de lubrification (31).

8. Palier axial hydrodynamique selon la revendication 6 ou 7, dans lequel l'au moins un alésage d'alimentation (35) est orienté radialement vers l'extérieur suivant un certain angle.

9. Turbosoufflante à gaz d'échappement comprenant un arbre avec un palier axial hydrodynamique selon l'une quelconque des revendications précédentes.

10. Disque flottant pour l'utilisation dans un palier axial hydrodynamique entre un boîtier de palier et un arbre monté à rotation dans le boîtier de palier selon l'une quelconque des revendications 1 à 8, lequel disque flottant présente, de chaque côté, à chaque fois une surface de bague circulaire profilée avec plusieurs surfaces de clavette (32), les surfaces de clavette étant réalisées de telle sorte qu'elles rétrécissent une fente de lubrification entre le disque flottant et une surface de glissement plane à chaque fois dans la direction périphérique, **caractérisé en ce qu'**un côté du disque flottant est réalisé de manière étagée radialement par rapport à l'autre côté, de sorte que les fentes de lubrification formées par les surfaces de bague circulaire profilées et les surfaces de glissement planes des deux côtés du disque flottant présentent des dimensions géométriques différentes les unes des autres, lesquelles donnent lieu à des surfaces portantes de tailles différentes des deux côtés du disque flottant.

11. Disque flottant selon la revendication 10, dans lequel les deux surfaces de bague circulaire profilées sont divisées à chaque fois en un nombre différent de segments (34), un segment (34) comprenant à chaque fois une surface de clavette (32).
